# EUROPÄISCHE PATENTANMELDUNG

(11) **EP 0 623 452 A2**
(43) Veröffentlichungstag der Anmeldung: **09.11.1994**
(21) Anmeldenummer: 94106709.2
(22) Anmeldetag: 29.04.1994
(51) Int. Cl.: B29D 7/01, C08J 5/18, B29K 105/16, B29K 23/00

(54) **Ungereckte, falt- und bedruckbare Kunststoff-Folie als Papierersatzstoff**

(30) Priorität: 05.05.1993 DE 4314838
(71) Anmelder: BP Chemicals PlasTec GmbH, D-89165 Dietenheim (DE); PCD-Polymere Gesellschaft m.b.H., A-2323 Schwechat-Mannswörth (AT)
(72) Erfinder: Schnäbele, Jürgen, D-82347 Bernried (DE); Schmidt, Norwin, D-89233 Neu-Ulm , Reutti (DE); Lüdemann, Henning, D-87700 Memmingen (DE); Wolfsberger, Anton, A-4020 Linz (AT); Hammer, Harald, Dr., A-4061 Pasching (AT)
(74) Vertreter: Hoeger, Stellrecht & Partner

(57) **Zusammenfassung**

Es wird eine neuartige ungereckte, falt- und bedruckbare Kunststoff-Folie mit einer Dicke von 30 bis 100 µm als Papierersatzstoff vorgeschlagen, welche eine einen partikelförmigen anorganischen Füllstoff enthaltende Polymermatrix umfaßt, wobei der Füllstoff einen Anteil von 20 bis 60 Gew. % an der gefüllten Matrix aufweist und wobei die Kohäsionskräfte zwischen Füllstoff und Matrix kleiner sind als die Kohäsionskräfte in der Matrix selbst.

## Beschreibung

Die Erfindung betrifft eine neuartige ungereckte, falt- und bedruckbare Kunststoff-Folie mit einer Dicke von 30 bis 100 µm als Papierersatzstoff.

Aufgrund der derzeit geltenden Abfallgesetzgebung und Abfallentsorgungssituation besteht ein Bedürfnis nach sortenreinen Verpackungen, wobei unter sortenreinen Verpackungen im weitesten Sinne sämtliche Bestandteile einer Verpackung, das heißt insbesondere auch Verpackungsaufkleber Beipackzettel etc., zu verstehen sind, so daß die Verpackung insgesamt einer Wiederverwertung mit demselben Verwendungszweck zugeführt werden kann.

Parallel zur Entwicklung von sortenreinen Verpackungen, die hundertprozentig wiederverwertet werden können, ist deshalb die Entwicklung von Papierersatzstoffen interessant, die sich für die Herstellung von Aufklebern, Beipackzetteln etc. gleichermaßen eignen und die zusammen mit den weiteren Teilen der Verpackung als sortenrein gelten können und zusammen der Wiederverwertung zugeführt werden können.

Die Faltbarkeit des Papierersatzstoffes ist dabei ein entscheidendes Kriterium und bedeutet, daß die Rückstellkräfte soweit vermindert sein müssen, daß nach dem Falten in einem Kaltverformungsschritt (wie bei Papier) eine Planlage des gefalteten Blatts erhalten werden muß, die sich auch nach einem Öffnen und wieder Zurückfalten einstellen muß. Eine ungefähre Planlage sollte auch bei dem aufgefalteten Blatt erzielbar sein, und die Knick- oder Faltstelle sollte so dauerhaft sein, daß sie zumindest einige Falt- und Entfaltungsschritte unbeschadet übersteht.

Diese Aufgabe wird mit der eingangs beschriebenen falt- und bedruckbaren Kunststoff-Folie erfindungsgemäß dadurch gelöst, daß diese eine Polymermatrix umfaßt, welche einen partikelförmigen anorganischen Füllstoff enthält, wobei der Füllstoff einen Anteil von 20 bis 60 Gew. % an der gefüllten Matrix aufweist und wobei die Kohäsionskräfte zwischen Füllstoff und Matrix kleiner sind als die Kohäsionskräfte in der Matrix selbst.

Gegebenenfalls ist der Polymermatrix der Kunststoff-Folie noch ein Anteil bis 10 Gew. % Titandioxid - bezogen auf die gefüllte Matrix - als Pigment beigemischt.

Im Prinzip ließen sich auch noch dünnere Materialien verwenden, jedoch treten dann Probleme mit der Auswahl des Füllstoffes, insbesondere der Korngröße des Füllstoffes, auf und eine weitere Verkleinerung des Füllstoffes vor dessen Anwendung in der Polymermatrix verursacht höhere Kosten.

Mit 30 µm Foliendicke wird eine noch etwas durchscheinende Folie erhalten, welche bereits mit den geringsten TiO₂-Gehalten gut bedruckbar ist, und vor allem ist die Bedruckung auch bei durchscheinendem Licht gut lesbar.

Die Obergrenze für die Foliendicke ergibt sich durch die abnehmende Faltbarkeit, wobei unter Faltbarkeit das Zurückfalten der Folie auf sich selbst in einem Kaltverformungsprozeß verstanden wird. Das heißt, die Folie soll so behandelt werden können wie dies vom Papier her bekannt ist, so daß insbesondere die bereits bestehenden Anlagen zum Bedrucken, Schneiden, Falten etc. im wesentlichen ohne Anpassung an das neue Ersatzstoffmaterial verwendet werden können. Insbesondere soll das Material ohne vorheriges Rillen faltbar sein, wie dies, wie schon erwähnt, von der Papierverarbeitung her bekannt ist.

Eine bevorzugte Dicke für die Kunststoff-Folie als Papierersatzstoff liegt im Bereich von 40 bis 55 µm. In diesem Dickenbereich ist das papierähnliche Verhalten bei der Handhabung, insbesondere auch der maschinellen Verarbeitung, besonders ausgeprägt.

Die neuartige falt- und bedruckbare Kunststoff-Folie läßt sich als Coextrudat mit vorzugsweise einer Polypropylenschicht herstellen und dann als Ersatzstoff für kunststoffbeschichtete Papiere verwenden.

Üblicherweise empfiehlt sich für die Handhabung beim Bedrucken der Kunststoff-Folie als Papierersatzstoff eine sehr hohe Antistatikausrüstung, die zum einen durch ein Beimischen von Antistatikmitteln zu der Polymermatrix erzielt werden kann, andererseits jedoch genausogut mit einer Antistatikbeschichtung der Kunststoff-Folie vorgenommen werden kann. Dies kann jeweils von der Wirtschaftlichkeit der einen oder anderen Verfahrensweise abhängig gemacht werden. Die Folie selbst wird vor der eigentlichen Bedruckung normalerweise einer Coronabehandlung oder einem äquivalenten Verfahrensschritt unterzogen, um die Aufnahmefähigkeit der Oberfläche für die Druckfarben und deren Haftung auf dem Untergrund zu verbessern. Von besonderer Bedeutung ist dies auch für die Verbesserung der Maschinengängigkeit beim Druckvorgang.

Die TiO₂-Pigmentmaterialien, die zum Einfärben der Kunststoff-Folie verwendet werden können, sind handelsübliche TiO₂-Pigmente mit einem mittleren Teilchendurchmesser zwischen 3 und 8 µm. Die Pigmentmaterialien sind getrennt von den Füllstoffen zu sehen, auch wenn TiO₂ als Füllstoff geeignet ist.

Die Materialauswahl für das Material der Polymermatrix läßt eine relativ breite Palette von Polymeren zu; die Auswahl kann insbesondere unter Polyolefinen, PVC, Polyestern und/oder Copolymerisaten hiervon getroffen werden. Die Polymermatrix besteht vorzugsweise aus einer einzigen Polymerphase.

Besonders bevorzugt sind allerdings auch im Hinblick auf deren Verwendung als Rohstoffe für die Verpackungsmaterialien Polyolefine, und hiervon insbesondere Polypropylene.

Die Polymere werden in der Kunststoffmatrix häufig mit einem mittleren Molekulargewicht von ca. 10.000 bis 750.000 eingesetzt.

Die erfindungsgemäße Folie enthält den Füllstoff als homogene Zumischung zu einem bereits fertig auspolymerisierten Kunststoffmaterial. Der Füllstoff wird also nicht - wie dies im Zusammenhang mit füllstoffverstärkten Kunststoffen bekannt ist - in der Polymerisationsreaktionsmischung aus Monomer und/oder Präpolymer dispergiert und während des Aushärtens der Reaktionsmischung in die Kunststoffmatrix eingebaut. Selbstverständlich ist es aber denkbar, solches verstärktes Kunststoffmaterial als Kunststoffmatrix in bestimmten Anwendungsfällen auch im Zusammenhang mit der vorliegenden Erfindung zu benutzen.

Für die Füllstoffe der Folie steht eine breite Palette an Füllstoffen zur Verfügung.

Für die anorganischen Füllstoffe seien erwähnt SiO₂, insbesondere in Form von Glas oder Quarz, Silikate, insbesondere Talkum, Titanate, TiO₂, Aluminiumoxid, Kaolin, Calciumcarbonate, insbesondere in Form von Kreide, Magnesite, MgO, Eisenoxide, Siliciumcarbide, Siliciumnitrite, Bariumsulfat oder dgl.

Die Form der Füllstoffpartikel wird wohl am häufigsten granular sein, aber auch plättchenförmige, faserförmige oder stabförmige Füllstoffpartikel sind sowohl als im wesentlichen einheitliche Form oder auch in Mischung mit anderen Formen als Füllstoffpartikel möglich.

Die mittlere Partikelgröße des Füllstoffes reicht von ca. 5 µm bis nahe an die halbe Dicke der Kunststoff-Folie heran. Als Partikelgröße ist hier die Abmessung der größten Ausdehnung des Partikels gemeint. Die bevorzugte mittlere Partikelgröße liegt bei 10 bis 30 µm.

Besonders bevorzugt als Füllstoff ist Talkum, das sich insbesondere gut als Füllstoff für Polypropylen bewährt hat und sich auch gut mit TiO₂ als Pigment zum Einfärben der Matrix, um ein Durchscheinen von Licht zu unterbinden, eignet.

Besonders gute Erfahrungen wurden mit einer erfindungsgemäßen Kunststoff-Folie gemacht, die folgende Zusammensetzung aufwies:
55 Gew.% Polypropylen
30 Gew.% Talkum, mittlere Partikelgröße ca. 20 µm
10 Gew.% Farbmasterbatch mit ca. 70 Gew.% Pigmenten (TiO₂ etc.), Rest LDPE
5 Gew.% Antistatik-Masterbatch mit ca. 10 Gew.% Wirkstoff (Alkylamin), Rest Polypropylen
Als Antikstatikbeschichtungsmittel kommen sowohl kationaktive, anionaktive als auch nichtionogene Verbindungen in Frage. Auch amphotere Verbindungen können als Antistatika eingesetzt werden. Von besonderer Bedeutung sind quartäre Ammoniumverbindungen.

Wichtig ist jedenfalls, daß die Antistatika so zudosiert werden, daß der Oberflächenwiderstand der erfindungsgemäßen Kunststoff-Folie auf etwa 10⁸ bis 10¹⁰Ω erniedrigt ist. Die Herstellung der erfindungsgemäßen Folie sei im folgenden anhand eines Beispiels noch näher erläutert:
Beim ersten Schritt wird ein Polymergranulat mit den Füllstoffanteilen vermischt und nachfolgend extrudiert oder kalandriert. Die Vermischung, insbesondere die Homogenisierung, kann durch Kneten nach bekannten Verfahren, insbesondere der Doppelschneckencompoundierung, erfolgen. Die Einzelkomponenten können aber auch in einem Trockenmischverfahren miteinander vermischt werden. Eine bessere Homogenität, d.h. eine gleichmäßigere Verteilung der Füllstoffe in der Polymermatrix, wird durch die vorgeschaltete Herstellung eines sogenannten Compounds erreicht.

Eine Behandlung der Füllstoffpartikel mit Dispergierhilfsmitteln sollte in jedem Fall vor der Vermengung mit dem Matrix-Kunststoff erfolgen.

Das Compound wird im Extruder geschmolzen, und zwar bei Massetemperaturen von ca. 220° C und mehr sowie bei einem Massedruck von bis zu 250 bar. Die Abkühlung der Schmelze erfolgt vorzugsweise über eine Chill-roll bei 20° C bis ca. 40° C, aber auch andere Abkühlverfahren, gegebenenfalls mit einer Oberflächenbehandlung mit Coronaentladung kombiniert, sind möglich.

Außerdem soll natürlich erreicht werden, daß die Füllstoffpartikel eine möglichst gleichmäßige Verteilung in der Kunststoffmatrix erhalten und auch beim Produktionsprozeß beibehalten, so daß man bevorzugt Hilfsmittel zugibt, welche die Dispergierbarkeit der Füllstoffpartikel in der Matrix verbessern.

Als Dispergierhilfsmittel eignen sich insbesondere niedrigschmelzende organische Substanzen, welche eine große Benetzungsfähigkeit für den Füllstoff aufweisen. Konkrete Beispiele sind niedermolekulare Polyolefinwachse. Die Dispergierhilfsmittel werden bevorzugt auf die Füllstoffpartikel aufgebracht, bevor diese mit dem Granulat des Matrixkunststoffs vermischt, insbesondere geknetet werden.

## Patentansprüche

1. Ungereckte, falt- und bedruckbare Kunststoff-Folie mit einer Dicke von 30 bis 100 µm als Papierersatzstoff, wobei die Kunststoff-Folie eine Polymermatrix umfaßt, welche einen partikelförmigen anorganischen Füllstoff enthält, wobei der Füllstoff einen Anteil von 20 bis 60 Gew. % an der gefüllten Matrix aufweist und wobei die Kohäsionskräfte zwischen Füllstoff und Matrix kleiner sind als die Kohäsionskräfte in der Matrix selbst.

2. Kunststoff-Folie nach Anspruch 1, dadurch gekennzeichnet, daß bis 10 Gew. % TiO₂ als Pigment bezogen auf die gefüllte Matrix enthalten sind.

3. Kunststoff-Folie nach Anspruch 1 oder 2, dadurch gekennzeichnet, daß als Kunststoff für die Polymermatrix Polyolefine, PVC, Polyester und/oder Copolymerisate hiervon verwendet sind.

4. Kunststoff-Folie nach Anspruch 3, dadurch gekennzeichnet, daß als Kunststoffe Polyolefine, insbesondere Polypropylene und/oder Copolymere hiervon verwendet sind.

5. Kunststoff-Folie nach einem der Ansprüche 1 bis 3, dadurch gekennzeichnet, daß die Polymere der Polymermatrix ein mittleres Molekulargewicht von ca. 10.000 bis ca. 750.000 aufweisen.

6. Kunststoff-Folie nach einem der voranstehenden Ansprüche, dadurch gekennzeichnet, daß die Polymermatrix von einer einzigen Polymerphase gebildet ist.

7. Kunststoff-Folie nach einem der Ansprüche 1 bis 5, dadurch gekennzeichnet, daß der Füllstoff eine anorganische Substanz ist, ausgewählt aus der Reihe SiO₂, insbesondere in Form von Glas oder Quarz, Silikate, insbesondere Talkum, Titanate, TiO₂, Aluminiumoxid, Kaolin, Calciumcarbonate, insbesondere in Form von Kreide, Magnesite, MgO, Eisenoxide, Siliciumcarbite, Siliciumnitrite, Bariumsulfate oder dgl.

8. Kunststoff-Folie nach einem der voranstehenden Ansprüche, dadurch gekennzeichnet, daß der Füllstoff granular, plättchenförmig, faserförmig oder stabförmig ist.

9. Kunststoff-Folie nach einem der voranstehenden Ansprüche, dadurch gekennzeichnet, daß die Partikelgröße des Füllstoffes (gemessen über die größte Ausdehnung des Partikels) im Mittel ca. 5 µm bis etwa zur halben Dicke der Kunststoff-Folie beträgt.

10. Kunststoff-Folie nach einem der voranstehenden Ansprüche, dadurch gekennzeichnet, daß die Polymermatrix ein Antistatikmittel enthält.

11. Kunststoff-Folie nach einem der Ansprüche 1 bis 9, dadurch gekennzeichnet, daß die Kunststoff-Folie eine Antistatikausrüstung als Beschichtung mindestens einer Oberfläche umfaßt.

12. Kunststoff-Folie nach einem der voranstehenden Ansprüche, dadurch gekennzeichnet, daß die Foliendicke 40 bis 55 µm beträgt.

13. Verwendung einer Kunststoff-Folie nach einem der Ansprüche 1 bis 12, als Beipackzettel in Faltschachteln, welche auf Polymerbasis hergestellt sind.
